# EUROPÄISCHE PATENTSCHRIFT

(11) **EP 3 293 421 B1**
(45) Veröffentlichungstag und Bekanntmachung des Hinweises auf die Patenterteilung: **30.12.2020**
(21) Anmeldenummer: 17168144.8
(22) Anmeldetag: 26.04.2017
(51) Int. Cl.: F16H 55/54, A01D 69/00

(54) **SEGMENTVARIATOR FÜR EINE SELBSTFAHRENDE ERNTEMASCHINE ODER EIN ANBAUGERÄT**
SEGMENT VARIATOR FOR A SELF-PROPELLED HARVESTING MACHINE OR A MOUNTED IMPLEMENT
VARIATEUR À SEGMENT POUR UNE MOISSONNEUSE AUTOMOTRICE ET ÉQUIPEMENT

(30) Priorität: 09.09.2016 DE 102016116918
(43) Veröffentlichungstag der Anmeldung: 14.03.2018
(73) Patentinhaber: CLAAS Selbstfahrende Erntemaschinen GmbH, 33428 Harsewinkel (DE)
(72) Erfinder: Diekamp, Andreas, 49176 Hilter (DE); Kersten, Johannes, 49214 Bad Rothenfelde (DE); Herter, Felix, 33428 Harsewinkel (DE); Korte, Dr., Hubert, 48346 Ostbevern (DE)
(74) Vertreter: CLAAS Gruppe

(56) Entgegenhaltungen:
- EP-A2- 1 760 369
- EP-A2- 2 988 022
- DE-A1-102006 030 954
- DE-C- 672 884
- US-A1- 2009 137 353

## Beschreibung

Die vorliegende Erfindung betrifft einen Segmentvariator für eine selbstfahrende Erntemaschine oder ein Anbaugerät mit einem Grundkörper und einer Wellenaufnahme, die konzentrisch um eine Achse angeordnet und in und gegen eine axiale Richtung relativ zueinander verschiebbar sind, und mit einer Lauffläche für ein Triebmittel, die mehrere in die axiale Richtung nebeneinander angeordnete Laufrillen aufweist, und aus einer Vielzahl in Umfangsrichtung voneinander getrennten Rillensegmenten gebildet ist, wobei die Rillensegmente durch Verschieben des Grundkörpers in oder gegen die axiale Richtung relativ zur Wellenaufnahme gegen eine radiale Richtung zur Achse oder zurück verstellbar sind, wobei sich der Segmentvariator dabei reversibel von einem geöffneten Zustand, in dem die Rillensegmente in Umfangsrichtung voneinander beabstandet sind, in einen geschlossenen Zustand, in dem die Lauffläche geschlossen und die Rillensegmente in Umfangsrichtung aneinander angrenzend angeordnet sind, verstellt. Die vorliegende Erfindung betrifft zudem eine selbstfahrende Erntemaschine oder ein Anbaugerät mit einem solchen Segmentvariator.

In landwirtschaftlichen Arbeitsmaschinen werden Variatoren zur stufenlosen Anpassung der Drehzahl eingesetzt. Dabei wird zumeist die Drehzahl eines Triebmittels, das zum Antrieb eines Verarbeitungsaggregates für Erntegut vorgesehen ist, verändert. Eine selbstfahrende Erntemaschine mit einem Antriebssystem, das ein solches Variatorgetriebe umfasst, zeigt die Druckschrift DE 10 2006 030 954 A1. Bei der Erntemaschine handelt es sich hier um einen Feldhäcksler, bei dem das Variatorgetriebe Einzugsorganen zugeordnet ist, die zwischen einem Vorsatzgerät zum Ernten des Erntegutes und einer Häckseleinrichtung zum Zerkleinern des Erntegutes angeordnet, und zum Einziehen des Erntegutes in den Feldhäcksler vorgesehen sind.

Um die mittels eines Riemens übertragbare Leistung zu erhöhen, werden Keilrippenriemen oder Verbundkeilriemen verwendet, die mehr als eine Keilrippe aufweisen, da die an den Keilrippen auftretende Reibung das mit dem Riemen übertragbare Drehmoment bestimmt.

Eine stufenlos verstellbare Riemenantriebsvorrichtung zum Antrieb eines solchen Keilrippenriemens zeigt die Patentschrift EP 2 988 022 A2. Die Riemenantriebsvorrichtung weist eine segmentierte Lauffläche auf, deren Segmente an sich radial zu einer Welle erstreckenden, federbelasteten Stäben angeordnet und mittels diesen in und gegen die radiale Richtung verstellbar sind. Ein synchrones Verstellen der Segmente wird mittels Armen erreicht, die die Segmente mit einer entlang der Welle verschiebbaren Hülse verbinden. Dafür sind die Arme jeweils drehbar an dem Segment und der Hülse befestigt. Ein Verschieben der Hülse bewirkt ein Öffnen oder Schließen der Lauffläche, so dass sich ein Durchmesser der Lauffläche ändert.

Die drehbare Befestigung jedes der Arme an einem Segment sowie an der Hülse erfordert eine hohe Bauteilezahl und einen großen Montageaufwand. Zudem hat sich gezeigt, dass Triebmittel wie beispielsweise Keilriemen oder Keilrippenriemen an den segmentierten Laufflächen solcher Variatoren im geöffneten Zustand, in dem die Segmente in Umfangsichtung voneinander beabstandet sind und das Triebmittel im Bereich der Spalte zwischen den Segmenten nicht an diesen anliegt, so dass es sich absenken kann, zum Schwingen neigen. Dadurch verschlechtern sich die Laufruhe des Keilrippenriemens sowie die Geräuschentwicklung des Segmentvariators mit steigendem Durchmesser der Lauffläche und/oder steigender Drehzahl.

Die Druckschrift DE 672 884 offenbart ein Riemenscheibenwechselgetriebe, dessen Riemenscheiben aus segmentförmigen Teilen bestehen, die zwecks Durchmesserveränderung der Scheibe auf einem Träger in radialer Richtung verschiebbar sind und deren seitliche Begrenzungsflächen schräg zur Drehachse verlaufen, wobei die seitlichen Begrenzungsflächen der segmentförmigen Teile außer dem schrägen Verlauf parallel zueinander sind.

Aufgabe der Erfindung ist es, einen Segmentvariator zu schaffen, der weniger aufwändig herstellbar ist, mit dem ein hohes Drehmoment übertragbar ist, und der eine gute Laufruhe für das Triebmittel und eine kleine Geräuschentwicklung auch im geöffneten Zustand, insbesondere bei hoher Drehzahl, aufweist. Eine weitere Aufgabe der Erfindung ist es, eine selbstfahrende Erntemaschine oder ein Anbaugerät mit einem solchen Segmentvariator zu schaffen.

Die Aufgabe wird gelöst mit einem Segmentvariator für eine selbstfahrende Erntemaschine oder ein Anbaugerät mit den Merkmalen des unabhängigen Patentanspruchs 1, einer selbstfahrenden Erntemaschine mit den Merkmalen des unabhängigen Patentanspruchs 11 sowie einer Verwendung des Segmentvariators mit den Merkmalen des unabhängigen Patentanspruchs 15. Vorteilhafte Ausführungsformen sind den abhängigen Ansprüchen entnehmbar.

Dafür wird ein Segmentvariator für eine selbstfahrende Erntemaschine oder ein Anbaugerät geschaffen. Der Segmentvariator weist einen Grundkörper und eine Wellenaufnahme auf, die konzentrisch um eine Achse angeordnet und in und gegen eine axiale Richtung relativ zueinander verschiebbar sind. Zudem weist er eine Lauffläche für ein Triebmittel auf, die mehrere in die axiale Richtung nebeneinander angeordnete Laufrillen aufweist. Das Triebmittel ist bevorzugt als Keilrippenriemen oder als Verbundkeilriemen ausgebildet.

Die Lauffläche ist aus einer Vielzahl in Umfangsrichtung voneinander getrennten Rillensegmenten gebildet, die durch Verschieben der Wellenaufnahme in oder gegen die axiale Richtung relativ zum Grundkörper gegen eine radiale Richtung zur Achse oder zurück verstellbar sind. Dieses Verschieben ist bevorzugt stufenlos möglich. Der Segmentvariator verstellt sich durch Verschieben des Grundkörpers in die axiale Richtung relativ zur Wellenaufnahme von einem geöffneten Zustand, in dem die Rillensegmente in Umfangsrichtung voneinander beabstandet sind, in einen geschlossenen Zustand, in dem die Lauffläche geschlossen und die Rillensegmente in Umfangsrichtung aneinander angrenzend angeordnet sind. Da die Rillensegmente im geschlossenen Zustand aneinander angrenzend angeordnet sind, weist der Segmentvariator im geschlossenen Zustand einen minimalen Durchmesser auf. Durch Verschieben der Wellenaufnahme gegen die axiale Richtung relativ zum Grundkörper verstellt er sich zurück in einen geöffneten Zustand. Vorzugsweise weist er im geöffneten Zustand einen maximalen Durchmesser auf.

Der Segmentvariator zeichnet sich dadurch aus, dass die Rillensegmente (2) zumindest teilweise verschieden lang ausgebildet sind, und dass der Segmentträger (18) sich beim Verschieben der Wellenaufnahme (13) und des Grundkörpers (12) relativ zueinander entlang der Wellenaufnahme (13) und des Grundkörpers (12) verschiebt.

Durch das Verdrehen der einander benachbarten Rillensegmente um den Drehwinkel um die Achse zueinander ist ein Einlaufpunkt, an dem eine in einer Laufrille laufende Rippe des Triebmittels das Rillensegment erreicht, gegenüber dem Einlaufpunkt der in der benachbarten Laufrille laufenden Rippe des Triebmittels um den Drehwinkel verschoben oder versetzt. Dadurch werden sich entlang des Triebmittels und/oder quer dazu ausbreitende Wellen für jede der Laufrillen insbesondere zeitlich zueinander versetzt angeregt.

Die alternativ oder zusätzlich vorgesehene verschiedene Länge der Rillensegmente führt im geöffneten Zustand dazu, dass der Abstand zwischen den Rillensegmenten verschieden groß ist. Dadurch werden Wellen verschiedener Frequenz angeregt.

Aufgrund der Überlagerung der Wellen breiten sich diese weniger oder gar nicht aus. Trotz des gleichen Abstands der Segmente im geöffneten Zustand voneinander schwingt das Triebmittel daher im Betrieb des Segmentvariators weniger stark oder sogar gar nicht. Der Segmentvariator weist daher im Betrieb eine sehr gute Laufruhe auf, und die Geräuschentwicklung im Betrieb des Segmentvariators ist dadurch gering. Die verringerte Schwingungsneigung erhöht zudem die Lebensdauer des Triebmittels erheblich.

Die Rillensegmente werden beim Verschieben der Wellenaufnahme und des Grundkörpers relativ zueinander verschoben. Es ist aber auch eine Ausführungsform bevorzugt, die zum Öffnen oder Schließen des Segmentvariators ein Verdrehen der Rillensegmente vorsieht.

Die Rillensegmente sind an Segmentträgern angeordnet, die sich jeweils in eine radiale Richtung erstrecken. Bei dieser Ausführungsform werden die Rillensegmente beim Verschieben der Wellenaufnahme und des Grundkörpers relativ zueinander verschoben.

Dabei ist es in einer Ausführungsform bevorzugt, dass die Rillensegmente in Umfangsrichtung um denselben Winkel voneinander beabstandet sind. Bei dieser Ausführungsform können die Rillensegmente dieselbe Länge oder verschiedene Längen aufweisen.

In einer weiteren Ausführungsform ist es bevorzugt, dass die Segmentträger um verschiedene Winkel voneinander beabstandet sind. Dabei weisen die Rillensegmente verschiedene Längen auf.

Bei einem synchronen Verstellen aller Rillensegmente in radialer Richtung vom geschlossenen in den geöffneten Zustand entstehen zwischen verschieden langen Rillensegmenten Spalte verschiedener Länge. Dadurch weisen die im Bereich dieser Spalte angeregten Wellen die verschiedenen Frequenzen auf, die aufgrund der Überlagerung der Wellen zu einem weniger starken Schwingen des Triebmittels führen.

Um den Fertigungsaufwand für den Segmentvariator klein zu halten, sind bevorzugt mehrere in axialer Richtung benachbarte Rillensegmente zu einem Segmentblock miteinander verbunden. Dadurch sind diese Rillensegmente gemeinsam miteinander verstellbar. Eine durch die Einlaufpunkte der Rillensegmente verlaufende Außenkontur der Segmentblöcke ist dadurch nicht unterbrochen. Sie kann geradlinig verlaufen. Bevorzugt ist die Außenkontur jedoch ungeradlinig ausgebildet, beispielsweise gezackt, insbesondere v- förmig, w- förmig oder sägezahnförmig, so dass zwischen den in axialer Richtung benachbarten Rillensegmenten ein Versatz um den Drehwinkel besteht. Die Außenkontur kann zudem auch gebogen, insbesondere kreisbogenförmig, oval, sinusförmig, s- förmig oder u- förmig, ausgebildet sein. Dabei ist es bevorzugt, dass alle Segmentblöcke eine gleiche Außenkontur aufweisen. Dadurch kann die Bauteilezahl für den Segmentvariator klein gehalten werden.

Bevorzugt sind die Außenkonturen der Segmentblöcke gegen die radiale Richtung nach innen abgerundet. Dadurch wird vermieden, dass das Triebmittel im geöffneten Zustand des Segmentvariators an den Außenkonturen der Segmentblöcke reibt oder sogar zerrieben wird.

Vorzugsweise sind mindestens zwei Segmentblöcke in Umfangsrichtung hintereinander angeordnet. Es ist aber bevorzugt, mehr als zwei Segmentblöcke in Umfangsrichtung hintereinander vorzusehen.

Zum Verstellen des Segmentvariators weist dieser bevorzugt einen hydraulischen, pneumatischen oder elektrischen Verstellantrieb auf, der das Verschieben des Grundkörpers und der Wellenaufnahme relativ zueinander bewirkt. Der Segmentvariator wird dabei mit dem Verstellantrieb bevorzugt vom geöffneten Zustand in den geschlossenen Zustand verstellt. Ein Verstellen des Segmentvariators vom geschlossenen in den geöffneten Zustand erfolgt hingegen bevorzugt mittels Fliehkraft.

Dabei kann sowohl die Wellenaufnahme antriebsseitig und der Grundkörper mit den Rillensegmenten oder Segmentblöcken abtriebsseitig angeordnet sein, oder umgekehrt.

Eine Geschwindigkeit, mit der der Segmentvariator vom geöffneten in den geschlossenen Zustand oder zurück verstellbar ist, ist neben den Verstellkräften maßgeblich durch ein Gewicht der Segmente und/oder der Segmentträger bestimmt. Beim Verstellen des Segmentvariators mittels des Verstellantriebs ist zudem die mittels diesem auf den Segmentvariator ausgeübte Kraft oder der Druck maßgeblich. Demgegenüber erfordert ein hohes Gewicht der Segmente und/oder der Segmentträger eine hohe Verlustleistung zum Verstellen des Segmentvariators. Es ist daher bevorzugt, dass die Segmente und/oder Segmentträger aus Aluminium oder einer Aluminiumlegierung gefertigt sind, um die Verstellkräfte gering zu halten.

Die Segmentblöcke sind dabei bevorzugt jeweils an einem Segmentträger angeordnet. Der Segmentträger verschiebt sich beim Verschieben der Wellenaufnahme und des Grundkörpers relativ zueinander entlang der Wellenaufnahme und/oder des Grundkörpers. Dafür ist es bevorzugt, dass er zum Verschieben entlang der Wellenaufnahme und/oder des Grundkörpers zumindest ein Gegenführungsmittel umfasst, das in ein Führungsmittel der Wellenaufnahme oder des Grundkörpers eingreift.

In einer bevorzugten Ausführungsform weisen der Segmentträger als erstes Gegenführungsmittel eine erste Leiste oder eine erste Anformung, und die Wellenaufnahme als erstes Führungsmittel eine zum ersten Gegenführungsmittel korrespondierende erste Nut auf, die sich in radialer Richtung erstrecken. In einer weiteren bevorzugten Ausführungsform weisen der Segmentträger als zweites Gegenführungsmittel eine zweite Leiste oder eine zweite Anformung, und der Grundkörper als zweites Führungsmittel eine zum zweiten Gegenführungsmittel korrespondierende zweite Nut auf. Vorzugsweise erstrecken sich das zweite Gegenführungsmittel und das zweite Führungsmittel in einem Winkel größer als 0° und kleiner als 90°zur axialen Richtung, besonders bevorzugt in einem Winkel von etwa 20 - 70°zur axialen Richtung, ganz besonders bevorzug t in einem Winkel von etwa 35°- 55°. Der Winkel bestimmt den Abstand der Lauffläche von der Achse.

Vorzugsweise weist der Segmentvariator in axialer Richtung nebeneinander eine oder mehr Reihen Segmentblöcke auf. Die Reihen sind bevorzugt in Umfangsrichtung zueinander versetzt. Dadurch ist auch bei mehreren nebeneinander angeordneten Reihen Segmentblöcke die Gefahr der Anregung von sich entlang des Triebmittels und/oder quer dazu ausbreitende Wellen weiter verringert.

Um eine vollumfängliche Lückenüberdeckung zu gewährleisten, ist es weiterhin bevorzugt, dass das Zugmittel im geöffneten Zustand des Segmentvariators vollumfänglich durch zumindest eine Laufrille, besonders bevorzugt durch zwei oder mehr Laufrillen, gestützt ist. Dadurch kann sich das Triebmittel im geöffneten Zustand des Segmentvariators im Bereich der Spalte weniger stark oder gar nicht absenken. Es werden somit weniger oder zumindest weniger starke Schwingungen angeregt.

Die Aufgabe wird weiterhin gelöst mit einer selbstfahrenden Erntemaschine oder einem Anbaugerät, insbesondere einem Feldhäcksler, einem Mähdrescher, einem Traktor oder einer Ballenpresse, mit einem solchen Segmentvariator. Der Segmentvariator ermöglicht eine stufenlose Veränderung der Drehzahl, insbesondere an Aggregaten zur Verarbeitung von Erntegut.

Gegenüber einer selbstfahrenden Erntemaschine wird als Anbaugerät eine Maschine zum Einsatz in der Erntetechnik ohne eigene Energiequelle, insbesondere ohne Verbrennungsmotor, bezeichnet. Feldhäcksler, Mähdrescher und/oder Zugmaschinen wie beispielsweise Traktoren sind zumeist als selbstfahrende Erntemaschinen ausgebildet, Ballenpressen als Anbaugeräte. Die vorliegende Erfindung umfasst aber auch andere selbstfahrende Erntemaschinen und Anbaugeräte.

Dabei kann durch Erhöhung der Laufrillenzahl das übertragbare Drehmoment, und so die über das Triebmittel übertragbare Leistung, erhöht werden. Vorzugsweise weist der Segmentvariator dafür eine Rillenzahl größer als 4, besonders bevorzugt von 5 - 10, ganz besonders bevorzugt von 8 oder 9 Laufrillen auf. Damit ist eine sehr hohe Leistung, insbesondere größer als 200 kW, übertragbar. Dadurch können an vielen Aggregaten zusätzliche Untersetzungsgetriebe zur Reduktion der Drehzahl eingespart werden.

Besonders bevorzugt umfasst die selbstfahrende Erntemaschine oder das Anbaugerät einen Sensor zur Erfassung der Drehzahl der Wellenaufnahme oder des Grundkörpers, sowie eine Steuerungseinheit, die dazu eingerichtet ist, die selbstfahrende Erntemaschine oder das Anbaugerät, insbesondere mindestens ein Aggregat der selbstfahrenden Erntemaschine, in Abhängigkeit von der Drehzahl zu steuern. Durch die Erfassung der Drehzahl ist eine gezielte Steuerung zumindest eines oder mehrerer Aggregate der selbstfahrenden Erntemaschine oder des Anbaugerätes möglich.

Die selbstfahrende Erntemaschine oder das Anbaugerät ist in einer bevorzugten Ausführungsform ein Feldhäcksler, wobei der Segmentvariator zum Antrieb einer Häckseltrommel vorgesehen ist. Die Häckseltrommel ist ein Aggregat zum Häckseln des Erntegutes. In Abhängigkeit von der erforderlichen Schnittlänge werden herkömmlich Häckseltrommeln mit einer verschiedenen Anzahl Messer verwendet. Eine Feineinstellung der Schnittlänge erfolgt herkömmlich über eine Regelung der Einzugsgeschwindigkeit des Erntegutes in den Feldhäcksler bei gleicher Häckseltrommeldrehzahl. Die Ausführungsform des Feldhäckslers mit dem Segmentvariator ermöglicht eine Anpassung der Schnittlänge des Erntegutes, insbesondere für den gesamten erforderlichen Stellbereich, insbesondere ohne einen Austausch der Häckseltrommel, insbesondere Erntegut- abhängig, Schnittlängen- abhängig und/oder Feuchtegrad- abhängig. Zudem bestimmt das Verhältnis der Einzugsgeschwindigkeit zur Drehzahl der Häckseltrommel die Dicke der Erntegutmatte. Mit dem Segmentvariator ist diese daher regelbar.

Zusätzlich oder alternativ kann der Feldhäcksler jeweils einen Segmentvariator zum Antrieb einer Nachbeschleunigertrommel und/oder einen Segmentvariator zum Antrieb eines Corn-Crackers aufweisen. Die Nachbeschleunigertrommel ist ein Aggregat zum Nachbeschleunigen des gehäckselten Erntegutes. Der Corn- Cracker ist ein Aggregat zum Aufbrechen von Körnern und Früchten des gehäckselten Erntegutes. Die Drehzahl des Nachbeschleunigers und/oder des Corn- Crackers ist dann Erntegut- abhängig, Schnittlängen- abhängig und/oder Feuchtegrad- abhängig einstellbar.

In einer ebenfalls bevorzugten Ausführungsform ist die selbstfahrende Erntemaschine oder das Anbaugerät ein Feldhäcksler oder ein Mähdrescher, wobei der Segmentvariator zum Antrieb eines Vorsatzgerätes des Feldhäckslers oder Mähdreschers verwendet wird. Ein Vorsatzgerät ist ein insbesondere an die Erntemaschine anbaubares Aggregat zum Ernten des Erntegutes. Der Segmentvariator ermöglicht auch hier gegebenenfalls das Einsparen des zusätzlichen Untersetzungsgetriebes zur Reduktion der Drehzahl des Vorsatzgerätes. Zudem kann durch die Erfassung der Drehzahl des Segmentvariators die Drehzahl des Vorsatzgerätes, insbesondere Erntegut- abhängig, Schnittlängen- abhängig und/oder Feuchtegrad- abhängig, gezielt eingestellt werden. Dadurch ist eine Regelung der Drehzahl weiterer Aggregate der selbstfahrenden Erntemaschine oder des Anbaugerätes in Abhängigkeit von der Drehzahl des Vorsatzgerätes möglich.

Der Segmentvariator wird beim Mähdrescher zudem bevorzugt zum Antrieb der Aggregate Gebläse, Rotor, Dreschwerk, Lüfter, Spreuverteiler, Strohhäcksler und andere verwendet.

In einer weiteren bevorzugten Ausführungsform ist die selbstfahrende Erntemaschine oder das Anbaugerät eine Ballenpresse. Der Segmentvariator ist dann bevorzugt zur Anpassung der Drehzahl einer Zugmaschine, beispielsweise eines Traktors, an die der Ballenpresse vorgesehen. Bevorzugt ist er an der Ballenpresse angeordnet. Zudem ist es bevorzugt, dass die Ballenpresse eine Steuereinheit zur Anpassung der Drehzahl aufweist. Es ist aber ebenfalls bevorzugt, dass die Zugmaschine den Segmentvariator und/oder die Steuereinheit umfasst.

Die Aufgabe wird weiterhin gelöst mit der Verwendung eines solchen Segmentvariators als Spanneinheit zum Spannen eines Zugmittels, als Kupplung oder als Drehzahlvariator.

Bei der Verwendung des Segmentvariators als Spanneinheit werden die Wellenaufnahme und der Grundkörper vom geschlossenen Zustand ausgehend solange stufenlos relativ zueinander verstellt, bis ein Form- und/oder Kraftschluss der Rillensegmente oder Segmentblöcke mit dem Triebmittel ausreichend groß, oder ein Schlupf am Triebmittel so klein ist, dass eine Drehmomentübertragung insbesondere optimal möglich ist.
Bei der Verwendung des Segmentvariators als Kupplung werden die Wellenaufnahme und der Grundkörper vom geöffneten Zustand ausgehend solange stufenlos relativ zueinander verstellt, bis ein Schlupf am Triebmittel ausreichend groß ist, dass eine Drehmomentübertragung nicht mehr möglich ist.

Bei der Verwendung des Segmentvariators als Drehzahlvariator ist es bevorzugt, dass das Triebmittel durch eine zusätzliche Spanneinheit gespannt wird, so dass auch beim Verstellen des Segmentvariators vom geöffneten in den geschlossenen Zustand ein ausreichender Form- und/oder Kraftschluss für eine Drehmomentübertragung besteht. Als Spanneinheit wird bei dieser Ausführungsform bevorzugt eine Spannrolle verwendet, die über den gesamten Verstellweg eine konstante Verstellkraft ermöglicht. Die Spannrolle ist dafür vorzugsweise hydraulisch oder elektrisch angetrieben.

Die vorliegende Erfindung wird nachstehend anhand von Figuren beschrieben. Die Figuren sind lediglich beispielhaft und schränken den allgemeinen Erfindungsgedanken nicht ein. Es zeigen:
- Fig. 1: eine selbstfahrende Erntemaschine;
- Fig. 2: einen erfindungsgemäßen Segmentvariator, und zwar in a) in einem geschlossenen Zustand in einer ersten perspektivischen Ansicht, in b) ein Schnittbild des Segmentvariators aus a) im geschlossenen Zustand in einer weiteren perspektivischen Ansicht, in c) den Segmentvariator aus a) im geöffneten Zustand in einer weiteren perspektivischen Ansicht, in d) einen Ausschnitt aus c) in einer weiteren perspektivischen Ansicht, und in e) ein Schnittbild des Segmentvariators aus c) im geöffneten Zustand in einer weiteren perspektivischen Ansicht;
- Fig. 3: in a) und b) jeweils schematisch eine weitere Ausführungsform eines Segmentvariators;
- Fig. 4: schematisch eine weitere Ausführungsform eines Segmentvariators;
- Fig. 5: in a) - f) jeweils schematisch eine Außenkontur einer weiteren Ausführungsform eines Segmentvariators; und
- Fig. 6: in a) - c) jeweils schematisch einen Segmentvariator.

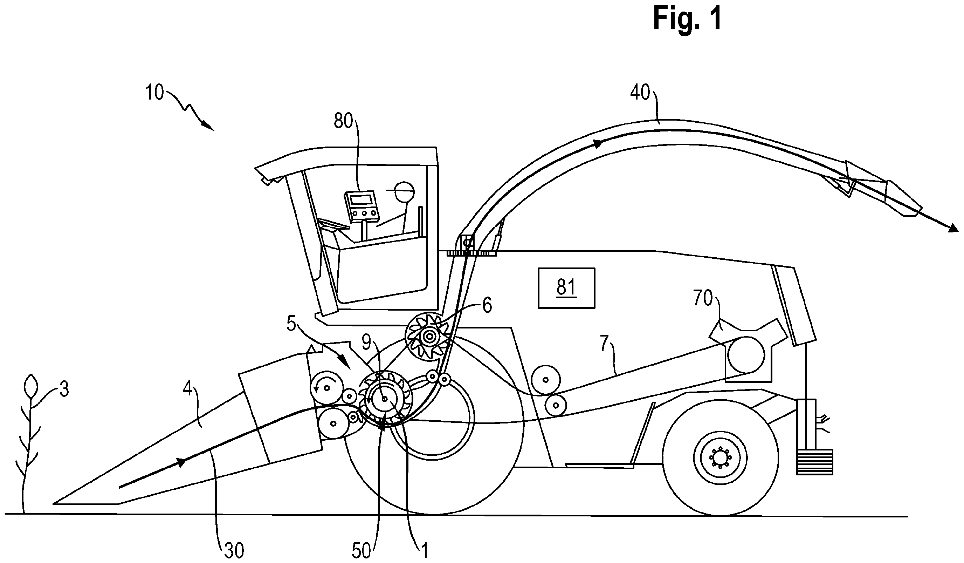

Fig.1 zeigt eine selbstfahrende Erntemaschine 10, hier einen Feldhäcksler. Die Erfindung ist aber nicht auf Feldhäcksler beschränkt sondern auch für andere selbstfahrende Erntemaschinen 10 oder Anbaugeräte verwendbar, insbesondere für Mähdrescher, Traktoren oder Ballenpressen. Im Rahmen der Fig. 1 werden die Begriffe selbstfahrende Erntemaschine 10 und Feldhäcksler synonym verwendet.

Der Feldhäcksler 10 nimmt frontseitig mit einem Vorsatzgerät 4, beispielsweise einem Maisgebiss oder einem Pick- up, Erntegut 3 auf. Das Erntegut 3 wird in einem Erntegutstrom 30 zu einer Häckseleinheit 5 gefördert. Dort wird es mit einer Häckseltrommel 50 zerkleinert. Dann wird es in einem Corn- Cracker 60 nachbearbeitet, um Körner und Früchte des gehäckselten Erntegutes 3 aufzubrechen. Anschließend wird es mittels eines Nachbeschleunigers 6 beschleunigt, um mit einem Auswurfkrümmer 40, insbesondere in einen Aufnahmewagen oder -Behälter (nicht dargestellt), ausgeworfen zu werden.

Zum Antrieb der Aggregate Häckseleinheit 5 und Nachbeschleuniger 6 wird ein Triebmittel 7, hier ein Keilrippenriemen, verwendet. Das Triebmittel 7 wird mittels eines Verbrennungsmotors 70 angetrieben.

Die Häckseltrommel 50 der Häckseleinheit 5 weist einen erfindungsgemäßen Segmentvariator 1 auf, der zur stufenlosen Einstellung ihrer Drehzahl vorgesehen ist. Die Häckseltrommel 50 und der Segmentvariator 1 erstrecken sich konzentrisch zu einer Achse 9.

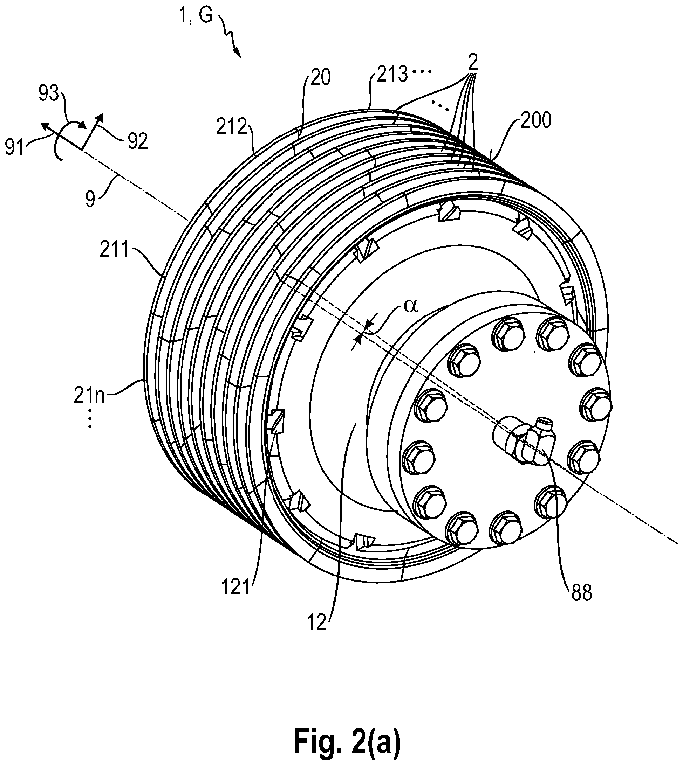

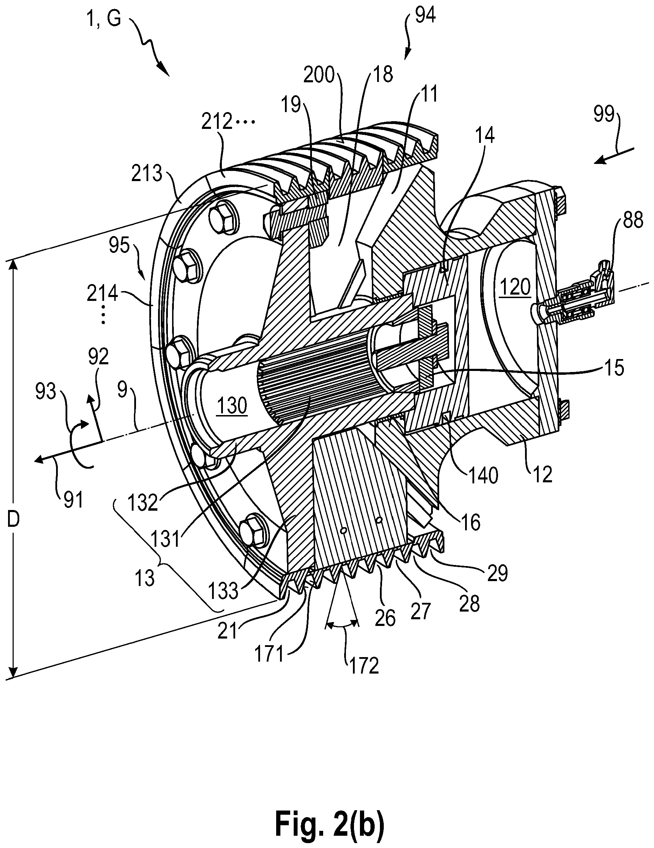

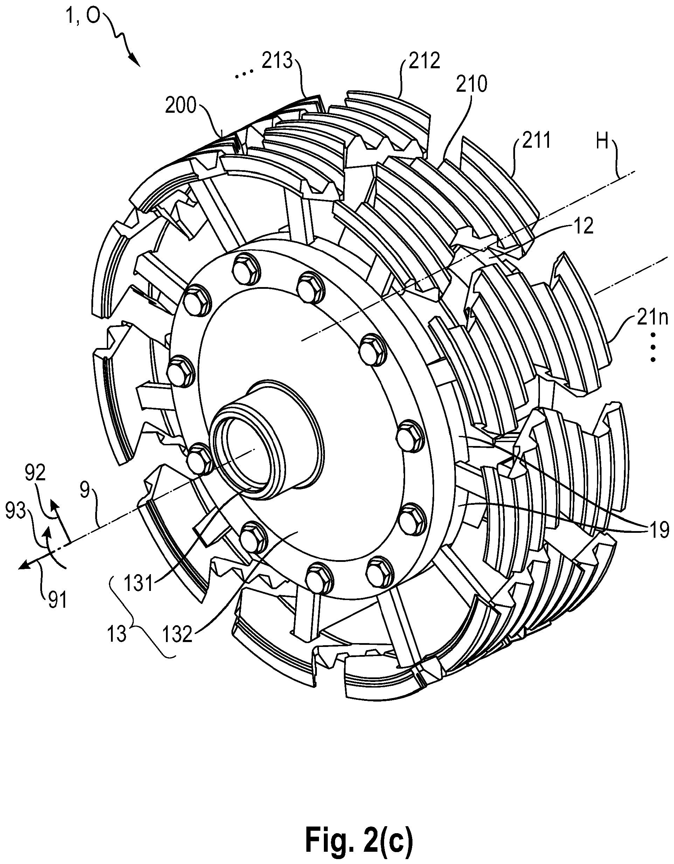

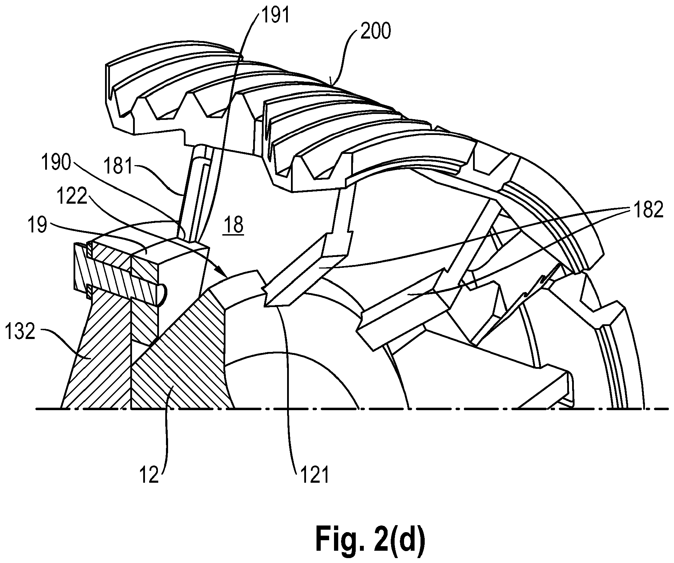

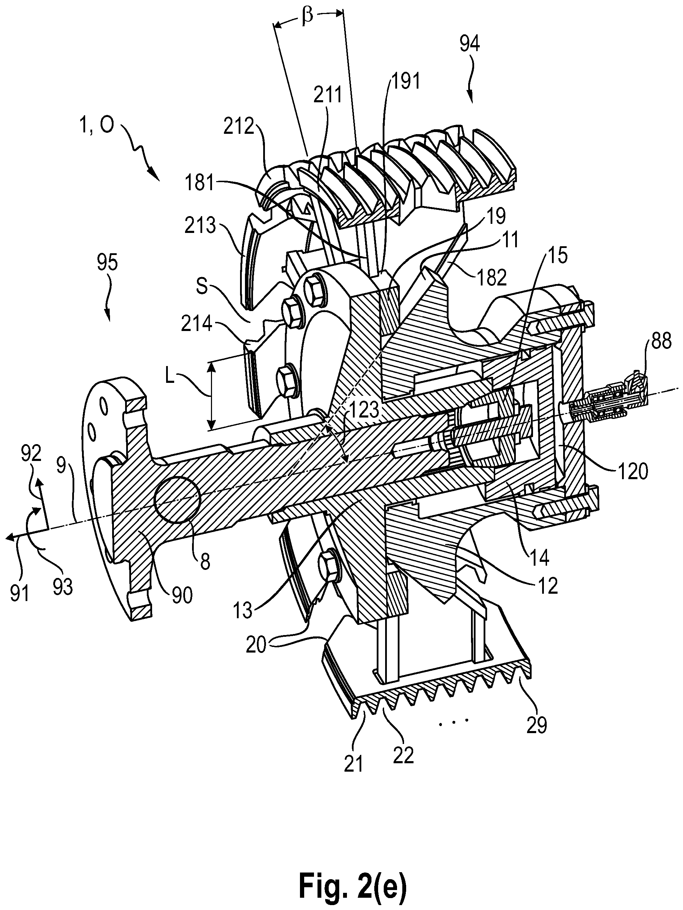

Das Triebmittel 7 umschlingt den Segmentvariator 1 an einer Segmentseite 94 (s. Fig. 2 b)). Dabei kann der hier dargestellte Segmentvariator 1 Segment- seitig 94 oder Wellen- seitig 95 angetrieben werden.

In der dargestellten Ausführungsform weist der Segmentvariator 1 einen Sensor 8 (s. Fig. 2 e)) zur Erfassung der Drehzahl einer Wellenaufnahme 13 (s. Fig. 2 b), c), e)) auf. Zudem weist die selbstfahrende Erntemaschine 10 eine Steuerungseinheit 81 auf. Durch die Erfassung der Drehzahl der Wellenaufnahme 13 ist eine gezielte Steuerung der Drehzahl des angetriebenen Aggregates, beispielsweise der Häckseltrommel 50 und/oder der weiteren Aggregate 6, 60 des Feldhäckslers 10, möglich. Dadurch ist eine Schnittlänge des Erntegutes 3, insbesondere im gesamten erforderlichen Stellbereich, vorzugsweise Erntegutabhängig, Schnittlängen- abhängig und/oder Feuchtegrad- abhängig, möglich. Dem Bediener (nicht bezeichnet) können Daten zur Einstellung der Schnittlänge sowie die aktuelle Schnittlänge an einer Anzeige 80 angezeigt werden.

Zusätzlich oder alternativ kann der Feldhäcksler 10 jeweils Segmentvariatoren 1 zum Antrieb der Aggregate Nachbeschleuniger 6 und/oder Corn- Cracker 60 aufweisen.

In Fig. 2 ist der Segmentvariator 1 in den Fig. 2 a) und b) in einem geschlossenen Zustand G und in den Fig. 2 c) - e) in einem geöffneten Zustand O dargestellt. Er weist einen Grundkörper 12 und die Wellenaufnahme 13 (s. Fig. 2 b)) auf. Der Grundkörper 12 und die Wellenaufnahme 13 erstrecken sich konzentrisch um die Achse 9. Sie sind in und gegen eine axiale Richtung 91 der Achse 9 relativ zueinander verschiebbar.

Zudem weist der Segmentvariator 1 eine Lauffläche 200 für das Triebmittel 7 auf. Die Lauffläche 200 weist mehrere, hier 9, Laufrillen 21 - 29 (s. Fig. 2 e)) auf, die in axialer Richtung 91 nebeneinander angeordnet sind. Ein Triebmittel 7 für diesen Segmentvariator 1 ist bevorzugt als Keilrippenriemen oder als Verbundriemen ausgebildet.
Die Lauffläche 200 des Segmentvariators 1 ist aus einer Vielzahl Rillensegmenten 2 gebildet, die hier in axialer Richtung 91 miteinander verbunden sind, so dass sie gemeinsam miteinander verstellbar sind. Die Rillensegmente 2 weisen alle dieselbe Länge auf. Die miteinander verbundenen Rillensegmente 2 werden jeweils als Segmentblock 211 - 21n bezeichnet. Bei dem dargestellten Segmentvariator 1 sind insgesamt elf Segmentblöcke 211 - 21n in Umfangsrichtung 93 nebeneinander vorgesehen.

Jeder Segmentblock 211 - 21n ist an einem Segmentträger 18 (s. Fig. 2 b)) angeordnet, der sich in eine radiale Richtung 92 der Achse 9 erstreckt. Durch Verschieben der Wellenaufnahme 13 in die axiale Richtung 91 relativ zum Grundkörper 12 werden die Segmentblöcke 211 - 21n jeweils gegen die radiale Richtung 92 zur Achse 9 verstellt, insbesondere verschoben. Der Segmentvariator 1 verstellt sich dabei stufenlos vom geöffneten Zustand O in den geschlossenen Zustand G. Durch Verschieben der Wellenaufnahme 13 gegen die axiale Richtung 91 relativ zum Grundkörper 12 werden die Segmentblöcke 211 - 21n jeweils in die radiale Richtung 92 der Achse 9 verschoben. Der Segmentvariator 1 verstellt sich dabei stufenlos vom geschlossenen Zustand G in den geöffneten Zustand O.

Im geöffneten Zustand O sind die Rillensegmente 2 in einer Umfangsrichtung 93 zur Achse 9 voneinander beabstandet. Im geschlossenen Zustand G grenzen sie aneinander an, so dass die Lauffläche 200 geschlossen ist. Daher weist der Segmentvariator im geschlossenen Zustand G einen minimalen, und im geöffneten Zustand O einen maximalen Durchmesser D auf.

Die Segmentträger 18 sind hier überall um denselben Winkel β voneinander beabstandet. Ein zwischen den Segmentblöcken 211 - 21n im geöffneten Zustand O bestehender Spalt S ist aufgrund derselben Länge I der Rillensegmente 2 der Segmentblöcke 211 - 21n bei diesem Segmentvariator 1 überall gleich.

Sichtbar ist aber, dass die in axialer Richtung benachbarten Rillensegmente 2 in Umfangsrichtung 93 zueinander um einen Drehwinkel α verdreht angeordnet sind. Dadurch ist eine sich etwa in axialer Richtung erstreckende Außenkontur 20 der Segmentblöcke hier ungeradlinig, hier w- förmig, ausgebildet. Dadurch wird im Betrieb des Segmentvariators 1 eine Anregung von Wellen, die sich entlang des Triebmittels 7 ausbreiten, verringert oder sogar verhindert. Der Segmentvariator 1 weist daher im Betrieb, insbesondere bei hoher Drehzahl, und im geöffneten Zustand eine gute Laufruhe und eine geringe Geräuschentwicklung auf.

Um den Durchmesser D, und dadurch die Drehzahl, des Segmentvariators 1 stufenlos anzupassen, sieht der Segmentvariator 1 ein hydraulisch angetriebenes Verstellen der Wellenaufnahme 13 relativ zum Grundkörper 12 mittels eines Verstellantriebs 120 vor. Im Grundkörper 12 ist dafür als Verstellantrieb 120 ein Druckraum vorgesehen, in den eine Hydraulikflüssigkeit (nicht dargestellt) durch eine Drehdurchführung 88 einfüllbar ist. In Abhängigkeit von der Menge der im Druckraum 120 befindlichen Hydraulikflüssigkeit ist die Wellenaufnahme 13 um einen Betrag (nicht bezeichnet) relativ zum Grundkörper 12 in axialer Richtung 91 verstellt. Im Rahmen der Erfindung werden die Begriffe Druckraum 120 und hydraulischer Verstellantrieb synonym verwendet.

Ein Schieber 14, der sich konzentrisch um die Achse 9 erstreckt und an dem die Wellenaufnahme 13 befestigt ist, ist dafür gegen die axiale Richtung 91 in den Druckraum 120 einschiebbar. Der Schieber 14 ist dichtend im Grundkörper 12 angeordnet. Dafür weist er an seiner dem Grundkörper 12 zugewandten Seite (nicht bezeichnet) eine Dichtungsnut 140 auf, in die eine Abdichtung (nicht dargestellt), insbesondere ein Dichtungsring, einlegbar ist. Beim Verschieben der Wellenaufnahme 13 relativ zum Grundkörper 12 in und gegen die axiale Richtung 91 bildet er einen Anschlag. Die Wellenaufnahme 13 ist am Schieber 14 festgelegt. Sie ist entlang einer Gleitfläche 16, die im Grundkörper 12 angeordnet ist, in und gegen die axiale Richtung 91 relativ zu diesem verschiebbar.

Die Wellenaufnahme 13 weist einen als Hohlkörper ausgebildeten Aufnahmekörper 132 auf, mit einem Innenraum 130 zur Aufnahme einer Welle 90 (s. Fig. 2e)). Im Innenraum 130 ist eine beispielsweise geriffelte Befestigungsfläche 131 vorgesehen, die mit einer Gegenbefestigungsfläche (nicht dargestellt) der Welle 90 so zusammenwirkt, dass diese in einem eingesteckten Zustand (s. Fig. 2e)) drehfest im Innenraum 130 angeordnet ist.

Quer zum Aufnahmekörper 132 weist die Wellenaufnahme 13 zudem einen Flansch 131 auf, der sich quer zur Achse 9 erstreckt. Zudem weist sie ein erstes Führungsmittel, das hier als eine erste Nut 190 ausgebildet ist, zum Führen des Segmentträgers 18 auf. Die erste Nut 190 ist radial außen am Flansch 132 vorgesehen. Dafür sind in Umfangsrichtung 93 gleichmäßig verteilt Haltestücke 19 am Flansch 131 angeordnet, die in Umfangsrichtung 93 voneinander beabstandet sind. Ein Spalt zwischen den Haltestücken 19 bildet die erste Nut 190. Die erste Nut 190 ist hier im Querschnitt T- förmig ausgebildet. Es sind aber auch andere Querschnitte der ersten Nut 190 denkbar, beispielsweise eine V- förmige oder eine Schwalbenschwanz- förmige erste Nut. Dadurch weist sie Hinterschneidungen 191 auf.

Am Segmentträger 18 ist ein erstes, hier korrespondierend zur ersten Nut 190 ausgebildetes Gegenführungsmittel 181 vorgesehen. Das erste Gegenführungsmittel 181 ist eine hier T-förmige erste Leiste. In einem montierten Zustand des Segmentvariators 1 ist die erste Leiste 181 in der ersten Nut 190 geführt. Die erste Leiste 181 und die erste Nut 190 erstrecken sich dann in die radiale Richtung 92. Aufgrund der Hinterschneidungen 191 der Nut 190 kann der Segmentträger 18 sich nicht in der axialen Richtung 91 oder der Umfangsrichtung 93 verschieben.

Der Grundkörper 12 weist eine sich in einem Winkel 123 (s. Fig. 2 e)) zur Achse 9 erstreckende Außenfläche 122 auf, in der zweite Nuten 121 als zweite Führungsmittel in Umfangsrichtung 93 gleichmäßig verteilt vorgesehen sind. Die zweiten Nuten 121 erstecken sich in dem Winkel 123 zur Achse 9. Sie sind hier ebenfalls im Querschnitt T- förmig ausgebildet. Auch die zweiten Nuten 121 können eine andere, beispielsweise V- förmige oder eine Schwalbenschwanz- förmige Form aufweisen.

Der Segmentträger 18 weist zudem ein zweites, hier korrespondierend zur zweiten Nut 121 ausgebildetes Gegenführungsmittel 182 auf. Das zweite Gegenführungsmittel 182 ist ebenfalls eine hier T- förmig ausgebildete zweite Leiste. Auch die zweite Leiste 182 erstreckt sich in dem Winkel 123 zur Achse 9. Im montierten Zustand ist sie in der zweiten Nut 121 geführt.

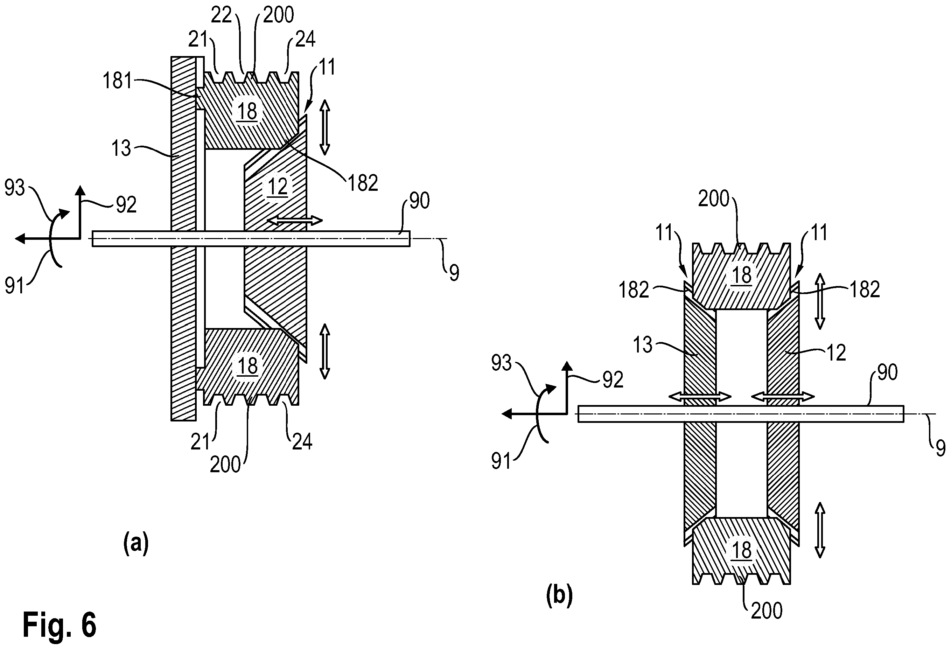

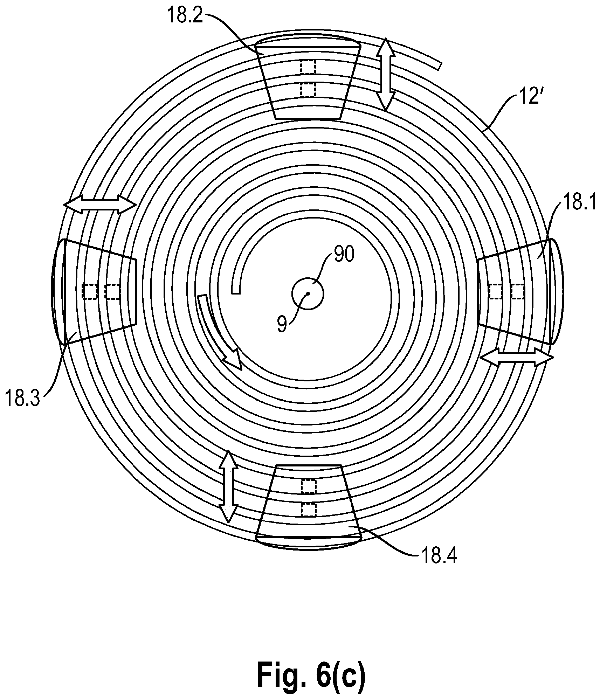

Aufgrund des Winkels 123, in dem die zweite Leiste 181 und die zweite Nut 121 zur Achse 9 angeordnet sind, wird der Segmentträger 18 und mit ihm die Segmentblöcke 211 - 21n jeweils beim Verschieben der Wellenaufnahme 13 relativ zum Grundkörper 12 nicht nur in oder gegen die axiale Richtung 91, sondern gleichzeitig gegen oder in die radiale Richtung 92 verschoben. Die zweite Nut 121 bildet daher beim Verschieben der Wellenaufnahme 13 relativ zum Grundkörper 12 eine Rampe 11 (s. Fig. 6) für den Segmentträger 18, entlang der dieser verschoben wird. Der Winkel 123 bestimmt somit einen Abstand (nicht bezeichnet) der Lauffläche 200 von der Achse 9, oder den Durchmesser D des Segmentvariators 1.

Anstelle der T- förmig ausgebildeten Führungsmittel 190, 121 und Gegenführungsmittel 181, 182 können auch Führungsmittel 190, 121 und Gegenführungsmittel 181, 182 mit anderem Querschnitt vorgesehen sein.

Durch Beaufschlagen des Druckraums 120 mit der Hydraulikflüssigkeit wird die Wellenaufnahme 13 hier in die axiale Richtung 91 verschoben. Dabei verschieben sich die erste Leiste 181 entlang der ersten Nut 190, und die zweite Leiste 182 entlang der zweiten Nut 121. Die Segmentträger 18, und mit ihnen die Segmentblöcke 211 - 21n, werden dabei gegen die radiale Richtung 92 verschoben. Zudem verschieben sich die Segmentträger 18, und mit ihm die Segmentblöcke 211 - 21n, dabei auch in die axiale Richtung 91. Mittels des Verstellantriebs 120 wird daher hier der Segmentvariator 1 vom geöffneten Zustand O in den geschlossenen Zustand G verstellt. Ein Verstellen des Segmentvariators 1 vom geschlossenen Zustand G in den geöffneten Zustand O erfolgt hingegen bevorzugt mittels Fliehkraft. Dabei wird die Hydraulikflüssigkeit aus dem Druckraum 120 durch die Drehdurchführung 88 heraus gedrückt.

Um die Drehzahl der Wellenaufnahme 13, der in die Wellenaufnahme 13 eingesteckten Welle 90 und/oder des Grundkörpers 12 zu erfassen, kann ein oder können mehrere Sensoren 8 am Segmentvariator 1 oder an der Welle 90 vorgesehen sein. Beispielhaft ist in Fig. 2 e) ein an der Welle 90 angeordneter Sensor 8 schematisch gezeigt.

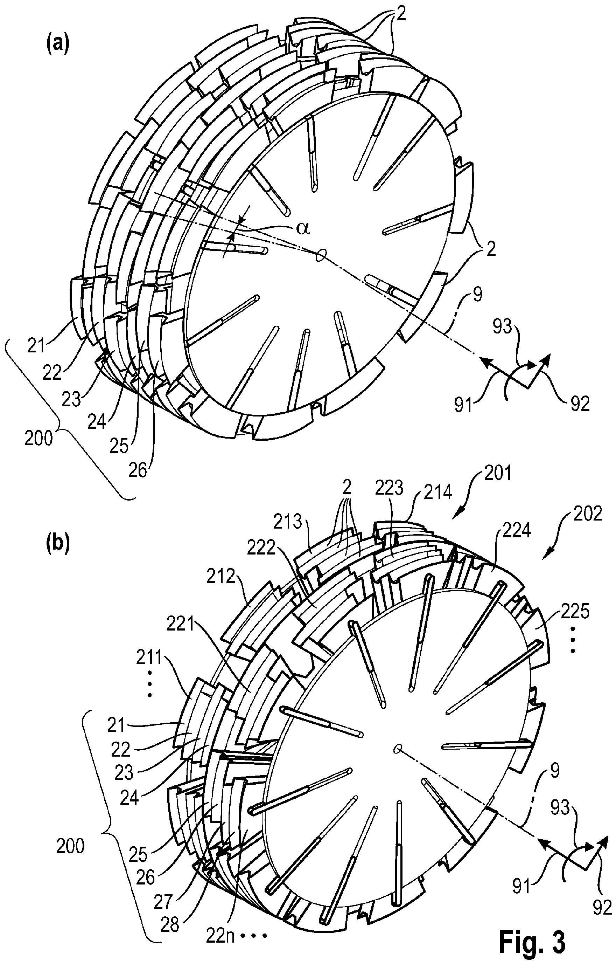

Fig. 3 zeigt in a) und b) schematisch und beispielhaft zwei weitere Ausführungsformen eines Segmentvariators 1.

Der Segmentvariator 1 der Fig. 3 a) weist eine Vielzahl Rillensegmenten 2 auf, die eine Lauffläche 200 für ein Triebmittel 7 bilden. Dabei sind jeweils mehrere Rillensegmente 2 in Umfangsrichtung 93 um die Achse 9 verteilt angeordnet. Zudem sind die Rillensegmente 2 in axialer Richtung 91 nebeneinander angeordnet, so dass sie Rillen 21 -16 bilden. Durch das Verdrehen oder Versetzen der Rillensegmente 2 um den Drehwinkel α um die Achse 9 ist ein durch die in axialer Richtung 91 benachbarten Rillensegmente 2 gebildeter Konturverlauf (nicht bezeichnet) nicht geradlinig sondern ungeradlinig ausgebildet. Da die Rillensegmente 2 sowohl durch das Verdrehen oder Versetzen um den Drehwinkel α in axialer Richtung 91 als auch in Umfangsrichtung 93 voneinander beabstandet sind, werden Schwingungen in einem diesen Segmentvariator 1 umschlingenden Triebmittel 7 nur schwer angeregt. Aufgrund der Vielzahl der für diesen Segmentvariator 1 erforderlichen Bauteile ist eine Herstellung eines solchen Segmentvariators 1 jedoch aufwändig.

Bei dem in Fig. 3 b) gezeigten Segmentvariator 1 sind die Rillensegmente 2 hingegen in axialer Richtung 91 jeweils zu zwei Reihen 201, 202 Segmentblöcken 211 - 21n, 221 - 22n zusammengefasst. Durch gleichzeitiges Verstellen beider Reihen 201, 202 Segmentblöcke 211 - 21n, 221 - 22n kann die Drehzahl eines sich über beide Reihen 201, 202 erstreckenden Triebmittels 7 verstellt werden. Denkbar ist aber auch eine Ausführungsform, bei der die Drehzahl zweier sich jeweils über eine Reihe 201, 202 Segmentblöcke 211 - 21n, 221 - 22n ersteckender Triebmittel 7 abhängig oder unabhängig voneinander verstellbar ist.

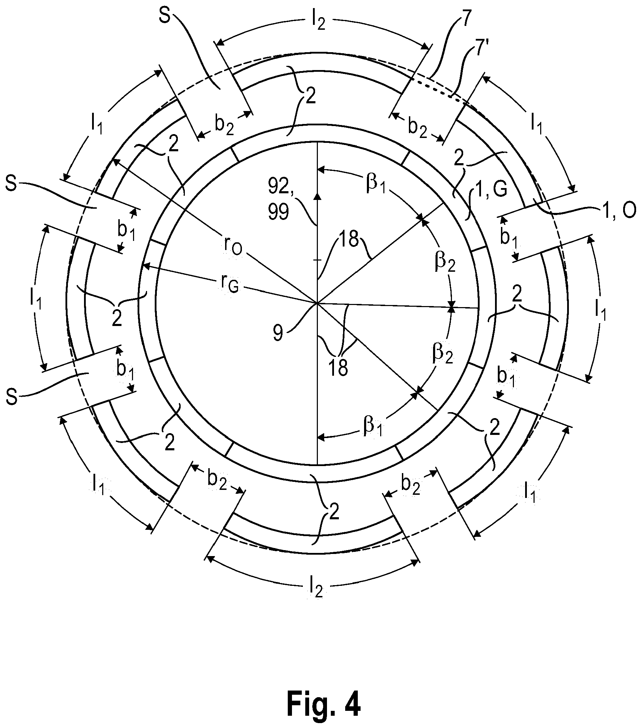

Der in Fig. 4 schematisch gezeigte Segmentvariator 1 weist Rillensegmente 2 verschiedener Länge I1, I2 auf. Dargestellt ist ein Schnittbild quer zur Achse 9. Die Fig. 4 zeigt den geschlossenen Zustand G sowie den geöffneten Zustand O. Im geschlossenen Zustand G ist ein Radius r_{G} des Segmentvariators 1, d. h. ein Abstand der Rillensegmente 2 von der Achse 9, kleiner als sein Radius ro im geöffneten Zustand O.

Die Rillensegmente 2 sind an den Segmentträgern 18 angeordnet. Der Übersichtlichkeit halber sind nicht alle Segmentträger 18 dargestellt. Die Segmentträger 18 erstrecken sich jeweils in eine radiale Richtung 92 zur Achse 9. Gegenüber dem geschlossenen Zustand G sind die Rillensegmente 2 im geöffneten Zustand O in eine Verstellrichtung 99, die sich in die radiale Richtung 92 jeweils des Segmentträgers 2, an dem sie angeordnet sind, erstreckt, verstellt.

Das Triebmittel 7 ist schematisch durch eine am geöffneten Segmentvariator 1, O anliegende Linie gezeigt.

Bei dieser Ausführungsform des Segmentvariators 1 sind die Segmentträger 18 in Umfangsrichtung 93 um die Achse 9 um verschiedene Winkel β₁, β₂ voneinander beabstandet. Die Winkeldifferenz wird durch die Variation der Länge I1, I2 der Rillensegmente 2 so ausgeglichen, dass die in Umfangsrichtung 93 benachbarten Rillensegmente 2 im geschlossenen Zustand G aneinander angrenzen.

Beim Verstellen der Rillensegmente 2 vom geschlossenen Zustand G in den geöffneten Zustand O entstehen aufgrund der verschiedenen Länge I1, I2 der Rillensegmente 2 Spalte S verschiedener Breite Länge b1, b2 zwischen ihnen, die zur Anregung von Wellen verschiedener Frequenzen führen. Aufgrund der Überlagerung der Wellen schwingt das Triebmittel 7 weniger stark, so dass die Geräuschentwicklung im Betrieb des Segmentvariators 1 geringer ist.

Fig. 4 zeigt zudem in einem Spalt S schematisch ein abgesenktes Triebmittel 7'. Dies wird durch das Verbinden mehrerer in axialer Richtung 91 hintereinander angeordneter Rillensegmente 2 zu einem Segmentblock 211 - 21n; 221 - 22n (s. Fig. 2, 3, 5) verringert oder sogar vermieden.

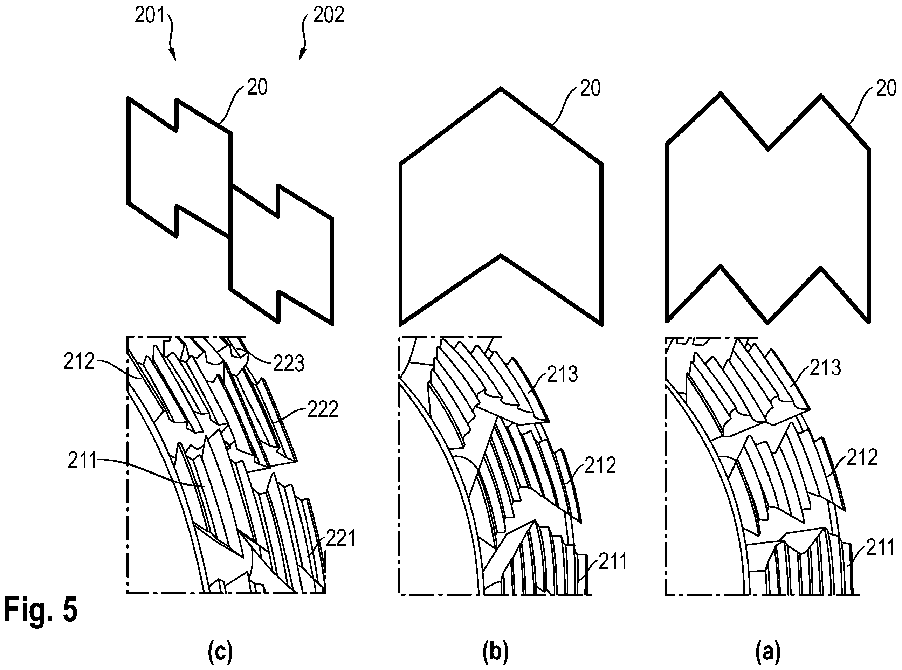

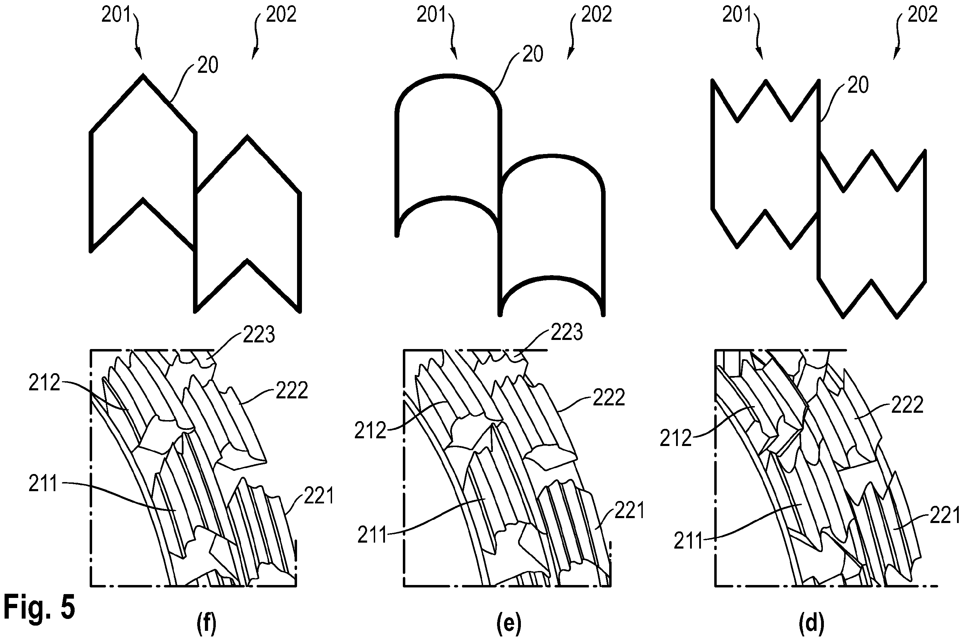

Fig. 5 zeigt verschiedene Ausführungsformen von Außenkonturen 20 der Segmentblöcke 211 - 21n, 221 - 22n, die durch das Verdrehen der Rillensegmente 2 um den Drehwinkel α um die Achse 9 entstehen.

Fig. 5 (a) zeigt einen Segmentvariator 1 mit einer Reihe w- förmig ausgebildeter Segmentblöcke 211 - 21n. Fig. 5 (b) zeigt einen Segmentvariator 1 mit einer Reihe v- förmig ausgebildeter Segmentblöcke 211 - 21n. Fig. 5 (c) zeigt einen Segmentvariator 1 mit zwei Reihen sägezahnförmig ausgebildeter Segmentblöcke 211 - 21n, 221 - 22n. Fig. 5 (d) zeigt einen Segmentvariator 1 mit zwei Reihen v- förmig ausgebildeter Segmentblöcke 211 - 21n, 221 - 22n. Fig. 5 (e) zeigt einen Segmentvariator 1 mit zwei Reihen u- förmig ausgebildeter Segmentblöcke 211 - 21n, 221 - 22n. Fig. 5 (f) zeigt einen Segmentvariator 1 mit zwei Reihen w- förmig ausgebildeter Segmentblöcke 211 - 21n, 221 - 22n.

Bei den zweireihig ausgebildeten Segmentvariatoren 1 sind die Reihen 201, 202 in Umfangsrichtung 93 zueinander versetzt.

Die Fig. 6 a) - c) verdeutlichen jeweils einen Verstellmechanismus für die Lauffläche 200 eines Segmentvariators 1. Der Segmentvariator 1 ist dafür jeweils schematisch gezeigt.

Der Verstellmechanismus des Segmentvariators der Fig. 6 a) ist ähnlich dem der Fig. 2 ausgebildet. Bei dieser Ausführungsform wird jedoch der Grundkörper 12 relativ zur Wellenaufnahme 13 entlang der Welle 90 in oder gegen die axiale Richtung 91 verstellt. Dabei werden die Segmentträger 18 entlang der Rampe 11 verstellt. Die Lauffläche 200 verstellt sich dabei in oder gegen die radiale Richtung 92 vom geöffneten Zustand O in die geschlossenen Zustand G oder zurück. Zudem durchsetzt die Welle 90 hier sowohl die Wellenaufnahme 13 als auch den Grundkörper 12.

Bei dem Segmentvariator der Fig. 6 b) sind die Wellenaufnahme 13 sowie der Grundkörper 12 spiegelsymmetrisch ausgebildet. Auch die Wellenaufnahme 13 weist hier daher eine Rampe 11 auf. Zum Verstellen des Segmentträgers 1 werden sowohl die Wellenaufnahme 13 als auch der Grundkörper 12 in gegensätzliche axiale Richtungen 91 relativ zueinander verstellt.

Bei dem Segmentvariator 1 der Fig. 6 c) wird, um die Lauffläche 200 zu vergrößern oder zu verkleinern, eine Schnecke 12', die um die Achse 9 angeordnet ist, verdreht. Die Segmentträger 18 sind gleichmäßig um die Achse 9 verteilt angeordnet, so dass sie denselben Abstand (nicht bezeichnet) voneinander aufweisen. Beim Verdrehen der Schnecke 12' gleiten die Segmentträger 18 entlang der Schnecke 12', so dass sie in oder gegen die radiale Richtung 92 verstellt werden.

Der erfindungsgemäße Segmentvariator 1 ist nicht nur als Drehzahlvariator zum stufenlosen Einstellen der Drehzahl, sondern auch als Spanneinheit zum Spannen eines Zugmittels 7 oder als Kupplung verwendbar. Aufgrund der mehreren Laufrillen 21 - 29 ist über ihn eine hohe Leistung von der von der Segmentseite 94 zur Wellenseite 95 oder umgekehrt übertragbar. Durch das Verdrehen und/oder Versetzen der Rillensegmente 2 um den Drehwinkel α zueinander weist das Triebmittel 7 im Betrieb des Segmentvariators 1 im geöffneten Zustand O und auch bei hohen Drehzahlen eine große Laufruhe auf und die Geräuschentwicklung ist klein. Zudem ist der Montageaufwand aufgrund der miteinander zu Segmentblöcken 211 - 21n, 221 - 22n verbundenen Laufrillen 21 - 29 gering und der Segmentvariator 1 kostengünstig herstellbar.

### Bezugszeichenliste

- 1: Segmentvariator
- 10: Selbstfahrende Erntemaschine oder Anbaugerät, Feldhäcksler
- 11: Rampe
- 12: Grundkörper
- 120: Druckraum
- 121: Zweite T- förmige Nut
- 122: Außenfläche
- 123: Rampenwinkel
- 13: Wellenaufnahme
- 130: Innenraum
- 131: Befestigungsfläche
- 132: Aufnahmekörper
- 133: Flansch
- 14: Verschiebebauteil
- 140: Dichtungsnut
- 15: Befestigungsflansch
- 16: Gleitfläche
- 18: Segmentträger
- 181: Erste T- förmige Leiste
- 182: Zweite T- förmige Leiste
- 19: Haltestück
- 190: Erste T- förmige Nut
- 191: Hinterschneidung
- 2: Rillensegment
- 20: Außenkontur
- 21 - 29: Rille
- 200: Lauffläche
- 201, 202: Reihe
- 211 - 21n, 221 - 22n: Segmentblock
- α: Drehwinkel
- B, β₁, β₂: Winkel
- 3: Erntegut
- 30: Erntegutstrom
- 4: Vorsatzgerät
- 40: Auswurfrohr
- 5: Häckseleinheit
- 50: Häckseltrommel
- 6: Nachbeschleuniger
- 60: Corn- Cracker
- 7, 7': Triebmittel
- 70: Verbrennungsmotor
- 8: Drehzahlsensor
- 80: Anzeige
- 81: Steuereinheit
- 88: Drehdurchführung
- 9: Achse
- 90: Welle
- 91: Axiale Richtung
- 92: Radiale Richtung
- 93: Umfangsrichtung
- 94: Segmentseite des Segmentvariators
- 95: Wellenseite des Segmentvariators
- 99: Verstellrichtung
- G: Geschlossener Zustand des Segmentvariators
- O: Geöffneter Zustand des Segmentvariators
- H: Fiktive Hilfslinie
- D: Durchmesser
- S: Spalt
- b₁, b₂: Breite
- l, l₁, l₂: Länge
- r_{G}: Radius des Segmentvariators im geschlossenen Zustand
- r_{O}: Radius des Segmentvariators im geöffneten Zustand

## Patentansprüche

1. Segmentvariator (1) für eine selbstfahrende Erntemaschine (10) oder Anbaugerät mit einem Grundkörper (12) und einer Wellenaufnahme (13), die konzentrisch um eine Achse (9) angeordnet und in und gegen eine axiale Richtung (91) relativ zueinander verschiebbar sind, und mit einer Lauffläche (200) für ein Triebmittel (7), die mehrere in die axiale Richtung (91) nebeneinander angeordnete Laufrillen (21 - 29) aufweist, und aus einer Vielzahl in Umfangsrichtung voneinander getrennten Rillensegmenten (2) gebildet ist, wobei die Rillensegmente (2) durch Verschieben des Grundkörpers (12) in oder gegen die axiale Richtung (91) relativ zur Wellenaufnahme (13) gegen eine radiale Richtung (92) zur Achse (9) oder zurück verstellbar sind, wobei sich der Segmentvariator (1) dabei reversibel von einem geöffneten Zustand (O), in dem die Rillensegmente (2) in Umfangsrichtung (93) voneinander beabstandet sind, in einen geschlossenen Zustand (G), in dem die Lauffläche (200) geschlossen und die Rillensegmente (2) in Umfangsrichtung (93) aneinander angrenzend angeordnet sind, verstellt, wobei die Rillensegmente (2) an Segmentträgern (18) angeordnet sind, die sich jeweils in die radiale Richtung (92) erstrecken, und wobei die in axialer Richtung (91) benachbarten Rillensegmente (2) zumindest teilweise in Umfangsrichtung (93) um einen Drehwinkel (a) zueinander verdreht angeordnet sind, **dadurch gekennzeichnet, dass**
o die Rillensegmente (2) zumindest teilweise verschieden lang ausgebildet sind, und dass der Segmentträger (18) sich beim Verschieben der Wellenaufnahme (13) und des Grundkörpers (12) relativ zueinander entlang der Wellenaufnahme (13) und des Grundkörpers (12) verschiebt.

2. Segmentvariator (1) nach Anspruch 1, **dadurch gekennzeichnet, dass** die Rillensegmente (2) an Segmentträgern (18) angeordnet sind, die sich in die radiale Richtung (92) erstrecken, und die in Umfangsrichtung (93) um denselben Winkel (β) oder um verschiedene Winkel (β₁, β₂) voneinander beabstandet sind.

3. Segmentvariator (1) nach einem der vorherigen Ansprüche, **dadurch gekennzeichnet, dass** mehrere in axialer Richtung (91) nebeneinander angeordnete Rillensegmente (2) zu einem Segmentblock (211 - 21n; 221 - 22n) miteinander verbunden sind.

4. Segmentvariator (1) nach einem der vorherigen Ansprüche, **dadurch gekennzeichnet, dass** mindestens zwei Segmentblöcke (211 - 21n; 221 - 22n) in Umfangsrichtung (93) hintereinander angeordnet sind.

5. Segmentvariator (1) nach einem der vorherigen Ansprüche, **dadurch gekennzeichnet, dass** die Segmentblöcke (211 - 21n; 221 - 22n) jeweils an einem Segmentträger (18) angeordnet sind.

6. Segmentvariator (1) nach einem der vorherigen Ansprüche, **dadurch gekennzeichnet, dass** der Segmentträger (18) zum Verschieben entlang der Wellenaufnahme (13) und/oder des Grundkörpers (12) zumindest ein Gegenführungsmittel, insbesondere eine Leiste (181, 182) oder eine Anformung, umfasst, die in ein Führungsmittel der Wellenaufnahme (13) oder des Grundkörpers (12), insbesondere in eine Nut (190, 121), eingreift.

7. Segmentvariator (1) nach einem der vorherigen Ansprüche, **dadurch gekennzeichnet, dass** sich ein Führungsmittel (121) des Grundkörpers (12) sowie sein korrespondierendes Gegenführungsmittel (182) in einem Winkel (123) größer als 0° und kleiner als 90° zur axialen Richtung, insbesondere in einem Winkel von etwa 40 - 60°, zur axialen Richtung (91) erstreckt.

8. Segmentvariator (1) nach einem der vorherigen Ansprüche, **dadurch gekennzeichnet, dass** alle Segmentblöcke (211 - 21n; 221 - 22n) eine gleiche Außenkontur (20), insbesondere eine gezackte, v- förmige, w- förmige oder sägezahnförmige, oder eine gebogene, kreisbogenförmige, ovale, sinusförmige, s- förmige oder u- förmige Außenkontur, aufweisen.

9. Segmentvariator (1) nach einem der vorherigen Ansprüche, **dadurch gekennzeichnet, dass** zwei oder mehr Reihen (201, 202) Segmentblöcke (211 - 21n; 221 - 22n) in axialer Richtung (91) nebeneinander angeordnet sind, wobei die Reihen (201, 202) in Umfangsrichtung (93) zueinander versetzt sind.

10. Segmentvariator (1) nach einem der vorherigen Ansprüche, **dadurch gekennzeichnet, dass** das Zugmittel (7) im geöffneten Zustand (O) des Segmentvariators (1) vollumfänglich durch zumindest eine Laufrille (21 - 29) der Lauffläche (200), insbesondere zwei Laufrillen (21 - 29), gestützt ist.

11. Selbstfahrende Erntemaschine (10) oder Anbaugerät, insbesondere Mähdrescher, mit einem Segmentvariator (1) nach einem der vorherigen Ansprüche.

12. Selbstfahrende Erntemaschine (10) oder Anbaugerät nach Anspruch 11, **dadurch gekennzeichnet, dass** sie ein Feldhäcksler ist.

13. Selbstfahrende Erntemaschine (10) oder Anbaugerätnach Anspruch 11, **dadurch gekennzeichnet, dass** sie ein Mähdrescher ist.

14. Selbstfahrende Erntemaschine (10) oder Anbaugerät nach einem der Ansprüche 11 - 13, **dadurch gekennzeichnet, dass** sie einen Sensor zur Erfassung der Drehzahl der Wellenaufnahme oder des Grundkörpers aufweist, sowie eine Steuerungseinheit, die dazu eingerichtet ist, zumindest ein Aggregat der selbstfahrenden Erntemaschine (10) oder des Anbaugerätes in Abhängigkeit von der Drehzahl zu steuern.

15. Verwendung eines Segmentvariators nach einem der Ansprüche 1 - 10 als Spanneinheit zum Spannen eines Zugmittels (7), als Kupplung oder als Drehzahlvariator.

## Claims

1. A segmental continuously variable transmission (1) for a self-propelled harvesting machine (10) or implement, having a main body (12) and a shaft support (13), which are concentrically disposed about an axis (9) and are displaceable relative to each other in and against an axial direction (91), and having a running surface (200) for a drive means (7) which has a plurality of running grooves (21 - 29) disposed adjacent to each other in the axial direction (91), and which is formed from a plurality of groove segments (2) which are separated from each other in the circumferential direction, wherein the groove segments (2) can be shifted in or against a direction (92) radial to the axis (9) or back by displacing the main body (12) relative to the shaft support (13) in or against the axial direction (91), whereupon the segmental continuously variable transmission (1) is reversibly shifted from an open condition (O), in which the groove segments (2) are separated from each other in the circumferential direction (93), into a closed condition (G) in which the running surface (200) is closed and the groove segments (2) are disposed adjoining each other in the circumferential direction (93), wherein the groove segments (2) are disposed on segment supports (18) which respectively extend in the radial direction (92), and wherein
the groove segments (2) which are adjacent to each other in the axial direction (91) are at least partially offset with respect to each other in the circumferential direction (93) by a rotational angle (a), **characterized in that**
o the groove segments (2) are at least in part constructed with different lengths, and **in that** upon displacement of the shaft support (13) and the main body (12) relative to each other, the segment support (18) is displaced along the shaft support (13) and the main body (12).

2. The segmental continuously variable transmission (1) according to claim 1, **characterized in that** the groove segments (2) are disposed on segment supports (18) which extend in the radial direction (92) and which are separated from each other in the circumferential direction (93) by the same angle (□) or by different angles (□₁, □₂).

3. The segmental continuously variable transmission (1) according to one of the preceding claims, **characterized in that** a plurality of groove segments (2) disposed adjoining each other in the axial direction (91) are connected together to form a segment block (211 - 21n; 221 - 22n).

4. The segmental continuously variable transmission (1) according to one of the preceding claims, **characterized in that** at least two segment blocks (211 - 21n; 221 - 22n) are disposed consecutively in the circumferential direction.

5. The segmental continuously variable transmission (1) according to one of the preceding claims, **characterized in that** each segment block (211 - 21n; 221 - 22n) is disposed on a segment support (18).

6. The segmental continuously variable transmission (1) according to one of the preceding claims, **characterized in that** in order to be displaced along the shaft support (13) and/or the main body (12), the segment support (18) comprises at least one counter stay, in particular a fillet (181, 182) or a moulding, which engages in a guide means of the shaft support (13) or of the main body (12), in particular in a groove (190, 121).

7. The segmental continuously variable transmission (1) according to one of the preceding claims, **characterized in that** a guide means (121) of the main body (12) as well as its corresponding counter stay (182) extends at an angle (123) of more than 0° and less than 90° to the axial direction, in particular at an angle of approximately 40 - 60° to the axial direction (91).

8. The segmental continuously variable transmission (1) according to one of the preceding claims, **characterized in that** all of the segment blocks (211 - 21n; 221 - 22n) have an identical outer contour (20), in particular a zigzag, v-shaped, w-shaped or sawtooth-shaped outer contour or a curved, arcuate, oval, sinusoidal, s-shaped or u-shaped outer contour.

9. The segmental continuously variable transmission (1) according to one of the preceding claims, **characterized in that** two or more rows (201, 202) of segment blocks (211 - 21n; 221 - 22n) are disposed next to one another in the axial direction (91), wherein the rows (201, 202) are offset with respect to each other in the circumferential direction (93).

10. The segmental continuously variable transmission (1) according to one of the preceding claims, **characterized in that** in the open state (O) of the segmental continuously variable transmission (1), a full circumference of the traction mechanism (7) is supported by at least one running groove (21 - 29) of the running surface (200), in particular two running grooves (21 - 29).

11. A self-propelled harvesting machine (10) or implement, in particular a combine harvester, having a segmental continuously variable transmission (1) according to one of the preceding claims.

12. The self-propelled harvesting machine (10) or implement according to claim 11, **characterized in that** that it is a forage harvester.

13. The self-propelled harvesting machine (10) or implement according to claim 11, **characterized in that** that it is a combine harvester.

14. The self-propelled harvesting machine (10) or implement according to one of claims 11 - 13, **characterized in that** it has a sensor for detecting the rotational speed of the shaft support or of the main body, as well as a control unit which is configured to control at least one assembly of the self-propelled harvesting machine (10) or implement as a function of the rotational speed.

15. Use of a segmental continuously variable transmission according to one of claims 1 - 10 as a tensioning unit for tensioning a traction mechanism (7), as a coupling or as a variable rotational speed transmission.

## Revendications

1. Variateur segmenté (1) pour une machine de récolte automotrice (10) ou un outil rapporté, comprenant un corps de base (12) et un logement d'arbre (13) qui sont disposés concentriquement autour d'un axe (9) et sont coulissants l'un par rapport à l'autre dans une direction axiale (91) et à l'opposé de celle-ci, et comprenant une surface de roulement (200) pour un moyen de traction (7), laquelle comporte plusieurs rainures de roulement (21-29) disposées les unes à côté des autres dans la direction axiale (91) et est formée d'une pluralité de segments rainurés (2) séparés les uns des autres dans la direction circonférentielle, les segments rainurés (2) étant déplaçables, par coulissement du corps de base (12) par rapport au logement d'arbre (13) dans la direction axiale (91) ou à l'opposé de celle-ci, à l'opposé d'une direction radiale (92) par rapport à l'axe (9) ou dans une direction contraire, le variateur segmenté (1) se déplaçant ainsi de façon réversible d'un état ouvert (O), dans lequel les segments rainurés (2) sont distants les uns des autres dans la direction circonférentielle (93), à un état fermé (G), dans lequel la surface de roulement (200) est fermée et les segments rainurés (2) sont disposés de manière contiguë les uns aux autres dans la direction circonférentielle (93), les segments rainurés (2) étant disposés sur des porte-segments (18) qui s'étendent respectivement dans la direction radiale (92), et les segments rainurés (2) voisins dans la direction axiale (91) étant disposés au moins en partie avec une légère rotation mutuelle dans la direction circonférentielle (93) selon un angle de rotation (a), **caractérisé en ce que** les segments rainurés (2) sont conçus au moins en partie avec des longueurs différentes, et **en ce que**, lors du coulissement du logement d'arbre (13) et du corps de base (12) l'un par rapport à l'autre, le porte-segment (18) coulisse le long du logement d'arbre (13) et du corps de base (12).

2. Variateur segmenté (1) selon la revendication 1, **caractérisé en ce que** les segments rainurés (2) sont disposés sur des porte-segments (18) qui s'étendent dans la direction radiale (92) et qui sont distants les uns des autres dans la direction circonférentielle (93) selon le même angle (β) ou selon des angles différents (β₁, β₂).

3. Variateur segmenté (1) selon une des revendications précédentes, **caractérisé en ce que** plusieurs segments rainurés (2) disposés les uns à côté des autres dans la direction axiale (91) sont reliés entre eux sous la forme d'un bloc de segments (211-21n ; 221-22n).

4. Variateur segmenté (1) selon une des revendications précédentes, **caractérisé en ce qu'**au moins deux blocs de segments (211-21n ; 221-22n) sont disposés les uns derrière les autres dans la direction circonférentielle (93).

5. Variateur segmenté (1) selon une des revendications précédentes, **caractérisé en ce que** les blocs de segments (211-21n ; 221-22n) sont disposés respectivement sur un porte-segment (18) .

6. Variateur segmenté (1) selon une des revendications précédentes, **caractérisé en ce que**, pour coulisser le long du logement d'arbre (13) et/ou du corps de base (12), le porte-segment (18) inclut au moins un moyen de contre-guidage, en particulier une nervure (181, 182) ou une partie surmoulée qui s'engage dans un moyen de guidage du logement d'arbre (13) ou du corps de base (12), en particulier dans une rainure (190, 121) .

7. Variateur segmenté (1) selon une des revendications précédentes, **caractérisé en ce qu'**un moyen de guidage (121) du corps de base (12) ainsi que son moyen de contre-guidage correspondant (182) s'étendent selon un angle (123) supérieur à 0° et inférieur à 90° par rapport à la direction axiale, en particulier selon un angle d'environ 40-60° par rapport à la direction axiale (91).

8. Variateur segmenté (1) selon une des revendications précédentes, **caractérisé en ce que** tous les blocs de segments (211-21n ; 221-22n) présentent un contour extérieur (20) identique, en particulier un contour extérieur dentelé, en V, en W ou en dents de scie, ou un contour extérieur incurvé, en arc de cercle, ovale, sinusoïdal, en S ou en U.

9. Variateur segmenté (1) selon une des revendications précédentes, **caractérisé en ce que** deux ou plusieurs rangées (201, 202) de blocs de segments (211-21n ; 221-22n) sont disposées les unes à côté des autres dans la direction axiale (91), les rangées (201, 202) étant décalées les unes par rapport aux autres dans la direction circonférentielle (93).

10. Variateur segmenté (1) selon une des revendications précédentes, **caractérisé en ce qu'**à l'état ouvert (O) du variateur segmenté (1), le moyen de traction (7) est en appui sur toute sa circonférence par l'intermédiaire d'au moins une rainure de roulement (21-29) de la surface de roulement (200), en particulier de deux rainures de roulement (21-29).

11. Machine de récolte automotrice (10) ou outil rapporté, en particulier moissonneuse-batteuse, comprenant un variateur segmenté (1) selon une des revendications précédentes.

12. Machine de récolte automotrice (10) ou outil rapporté selon la revendication 11, **caractérisée en ce qu'**il s'agit d'une ensileuse.

13. Machine de récolte automotrice (10) ou outil rapporté selon la revendication 11, **caractérisée en ce qu'**il s'agit d'une moissonneuse-batteuse.

14. Machine de récolte automotrice (10) ou outil rapporté selon une des revendications 11 à 13, **caractérisée en ce qu'**elle comporte un capteur pour détecter la vitesse de rotation du logement d'arbre ou du corps de base, ainsi qu'une unité de commande qui est agencée pour commander au moins un organe de la machine de récolte automotrice (10) ou de l'outil rapporté en fonction de la vitesse de rotation.

15. Utilisation d'un variateur segmenté selon une des revendications 1 à 10 comme unité de serrage pour serrer un moyen de traction (7), comme accouplement ou comme variateur de vitesse de rotation.
